(19) Europäisches Patentamt
European Patent Office
Office européen des brevets

(11) Numéro de publication: **0 068 953**
**B1**

# (12) FASCICULE DE BREVET EUROPEEN

(45) Date de publication du fascicule du brevet: **04.09.85**

(51) Int. Cl.[4]: **C 07 F 9/53**, C 08 L 25/18, C 08 F 30/02

(21) Numéro de dépôt: **82401049.0**

(22) Date de dépôt: **10.06.82**

(54) **Procédé de synthèse d'oxydes de phosphines tertiaires et nouveaux oxydes de phosphines tertiaires.**

(30) Priorité: **26.06.81 FR 8112593**

(43) Date de publication de la demande: **05.01.83 Bulletin 83/1**

(45) Mention de la délivrance du brevet: **04.09.85 Bulletin 85/36**

(84) Etats contractants désignés: **AT BE CH DE FR GB IT LI LU NL SE**

(56) Documents cités:
**DE - B - 1 167 831**
**FR - A - 2 110 074**
**FR - A - 2 235 132**
**SU - A - 808 503**

(73) Titulaire: **SOCIETE NATIONALE DES POUDRES ET EXPLOSIFS, 12, quai Henri IV, F-75181 Paris Cedex 04 (FR)**

(72) Inventeur: **Chevalier, Sammy Henri, 143 Boulevard Lefebvre, F-75015 Paris (FR)**
Inventeur: **Gautier, Jean-Claude, 1 rue Brossolette, F-94480 Ablon sur Seine (FR)**
Inventeur: **Soriaux, Claude René, 21 bis rue Caron, F-91200 Athis Mons (FR)**

EP 0 068 953 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

On a proposé dans le passé des procédés très divers pour la synthèse des oxydes des phosphines tertiaires.

Certains de ces procédés mettent en œuvre un réactif de Grignard en relation soit avec l'oxychlorure de phosphore, comme dans FR-A-2159716 de la demanderesse, ou avec un mélange de trichlorure de phosphore et d'oxygène comme dans FR-A-1399743, soit avec un chlorure de phosphonyle comme dans US-A-3258492, soit encore avec un dialkylphosphite et un halogénure organique comme dans FR-A-2346361.

D'autres procédés font appel à une technique de décomposition thermique par exemple du produit résultant de l'addition d'un oxyde d'un dialkylphosphite sur une α-oléfine comme dans DE-A-1912708, d'un halogénure de phosphonium quaternaire comme dans FR-A-2316244, d'un halogénure de phosphonium quaternaire hydroxylé comme dans US-A-3997611, ou encore d'une hydroxyméthyl phosphine tertiaire comme dans US-A-4020110.

SU-A-808503 décrit des oxydes de phosphines tertiaires préparés par réaction d'un acide phosphineux avec un halogénure d'alkyle ou d'aralkyle en présence d'une solution aqueuse alcaline. Le rendement est amelioré et le procédé est simplifié en présence d'iodure de tétrabutyle ammonium comme catalyseur.

D'autres procédés encore font intervenir le phosphore et un iodure d'alcoyle en présence d'iode, comme dans FR-A-2352824.

Ce qui caractérise ces procédés connus est une certaine lourdeur, l'existence de réactions secondaires difficiles à maitriser et l'emploi de conditions opératoires drastiques, notamment en ce qui concerne la température et les solvants qui doivent être secs. Par ailleurs ils ne permettent pas d'accéder facilement à des oxydes de phosphines du type RRR'PO.

Le procédé selon la présente invention consiste donc en un procédé de synthèse d'oxydes de phosphines tertiaires, caractérisé en ce qu'on fait réagir dans un milieu organique non miscible à l'eau – un oxyde de phosphine tertiaire hydroxyméthylée de formule générale:

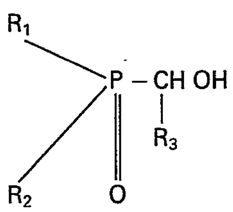

où

$R_1$ et $R_2$ sont identiques ou différents et sont un groupe alkyle linéaire ou ramifié comportant de 1 à 18 atomes de carbone, de préference de 1 à 12 atomes de carbone ou encore un groupe phényle et où

$R_3$ est un atome d'hydrogène ou un groupe de formule $-CH_2-R_4$ où

$R_4$ est un hydrogène ou un groupe alkyle linéaire ou ramifié comprenant de 1 à 11 atomes de carbone ou bien un groupe phényle,

– sur un dérivé halogéno méthylé en présence d'une phase aqueuse renfermant une base minérale et en présence d'un catalyseur de transfert de phase et sous agitation.

On peut citer comme oxydes de phosphine particulièrement convenables, les phosphines oxydes de diéthyle, di-n-propyle, di-n-butyle, di-n-hexyle, di(éthyl-2 hexyle), di-n-octyle, di-n-dodécyle, de méthyle et d'octyle, d'éthyle et de butyle, d'éthyle et d'heptyle, d'éthyle et de nonyle, de propyle et d'octyle et de diphényle.

Des dérivés halogéno méthylés entrant bien dans le cadre de l'invention sont notamment ceux de formule générale $XCH_2R$ dans laquelle:

X est un atome de chlore ou de brome et,

R est un groupe $-CH=CHY$ où

Y est un atome d'hydrogène, un groupe phényle ou un groupe $-CH_2X$ dans lequel X a l'une des significations indiquées plus haut ou bien,

R est un groupe 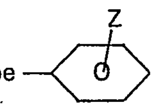

où

Z est un atome d'hydrogène, un groupe alkyle de $C_1$ à $C_4$, un groupe vinyle, un atome d'halogène, un groupe $-CH_2X$ ou un groupe

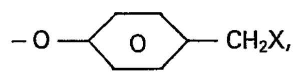

X ayant l'une des significations indiquées plus haut, ou bien,

R est une chaîne alkyle comprenant de 1 à 12 atomes de carbone,

éventuellement substituée par au moins un groupe nitrile ou époxy.

On utilise de préférence un dérivé halogéno méthylé non isolément sensible aux bases minérales fortes, c'est-à-dire un dérivé qui mis seul en présence d'une telle base ne réagit pas, ni ne se dégrade rapidement.

Le solvant organique utilisé dans le cadre de l'invention doit être un solvant commun à l'oxyde de dihydrocarbyle phosphine hydroxyméthylée et au dérivé halogéno méthylé, ne doit pas être miscible avec la phase aqueuse alcaline et doit être de préférence peu ou pas polaire, c'est-à-dire présenter une constante diélectrique inférieure à 8, à 20°C. La proticité du solvant est indifférente. Comme solvants convenant bien, on peut citer les solvants aromatiques tels que le benzène, le toluène, les xylènes et les solvants aliphatiques. Les mélanges de solvants sont également convenables.

La phase alcaline aqueuse doit renfermer une quantitié de base alcaline minérale au moins égale à la stoechiométrie de la réaction qui consiste globalement en une condensation avec libération d'une molécule d'acide halohydrique par molécule de dérivé halogéno méthylé.

La phase alcaline aqueuse doit contenir en pratique de 30% à 60% en poids d'une base minérale. Celle-ci est de préférence de la soude ou de la potasse, bien que d'autres bases, telles que la chaux peuvent être utilisées.

Le rapport des volumes de phase aqueuse et de phase organique n-est pas fortement critique mais en pratique se situe entre les valeurs extrêmes 5:1 et 1:10. L'agitation du milieu réactionnel favorise le contact entre les phases organiques et aqueuses. Une agitation vigoureuse est de nature à accélérer considérablement la vitesse de réaction.

La réaction n'est pas sensible à la pression de sorte qu'opérer sous la pression atmosphérique convient bien. En revanche, la température est un facteur critique puisqu'en dessous de 0°C la réaction est extrêmement lente voire inexistante et qu'au dessus de 90°C la réaction est pratiquement très difficile à mener à bien et s'accompagne d'une dégradation des produits formés. Une température comprise entre 40 et 70°C aboutit aux meilleurs résultats, en général. Il est avantageux d'opérer sous atmosphère inerte constituée d'argon ou d'azote. Lorsqu'un rendement élevé est recherché par rapport au dérivé halogéné (respectivement, par rapport à l'oxyde de phosphine), il est important d'employer une quantité d'oxyde de phosphine secondaire hydroxyméthylée (respectivement de dérivé halogéno méthylé) au moins égale à la stoéchiométrie par rapport au dérivé halogéno méthylé (respectivement, par rapport à l'oxyde de phosphine hydroxyméthylée).

Toutefois, le rapport molaire P/Cl s'il est avantageusement supérieur à 1 n'est pas utilement supérieur à 1,5 sauf dans le cas où le dérivé halogéno méthylé est une résine, notamment du type copolymère statistique indiqué plus haut.

La concentration des réactifs dans la phase organique est quant à elle en pratique comprise entre 1 et 20% en poids par rapport au solvant et entre 0,1 et 10% si le réactif est un polymère. Toutefois on peut aussi opérer en masse.

Le temps de réaction varie de quelques dizaines de minutes à quelques dizaines d'heures suivant la température utilisée et surtout suivant la nature du catalyseur de transfert de phase utilisé.

Les catalyseurs de transfert de phase dont l'utilisation est absolument indispensable dans le cadre de la présente invention sont ceux utilisés classiquement dans les réactions de catalyse par transfert de phase. On peut discerner deux groupes de tels catalyseurs.

Le premier groupe est constitué par les catalyseurs de transfert de phase ioniques parmi lesquels on distingue les sels d'ammonium, de phosphonium ou d'arsonium quaternaires de formule générale

$A_1A_2A_3A_4 \quad Y^+, X^-$

où Y = N, P ou As
où $A_1$, $A_2$, $A_3$ et $A_4$ sont identiques ou différents et sont des groupes alkyle de $C_1$ à $C_8$ ou des groupes benzyle et où $X^-$ est un anion. De préférence, $X^-$ est un anion halogénure, carboxylate, hydrogénosulfate ou hydroxy. Le second groupe est constitué par des complexants non-ioniques parmi lesquels on distingue les polyoxydes d'éthylène, les éthers-couronne et les cryptants. Les éthers-couronne sont des polyéthers macrocycliques où certains atomes d'oxygène peuvent être substitués par des atomes de soufre tandis que les cryptants sont des macrohétéro polycycles comprenant des hétérocycles polyéthers où certains atomes d'oxygène peuvent être remplacés par du soufre, les dits hétérocycles étant pontés par des atomes d'azote. Ces agents complexants ont la propriété de former avec les cations alcalins et alcalino-terreux des complexes jouissant d'une constante de stabilité extrêmement élevée. Ils sont largement décrits dans Jean-Marie LEHN, Design of Organic Complexing Agents – Strategies towards properties, Structure and Bonding, Volume 16, Springer Verlag, (1973), dans un article de E. VOGTLE et E. WEBER paru dans Kontakte, Volume 1, page 11 à 31, (1977) et intitulé Neutrale Organische Komplexliganden und ihre Alkalikomplexe – Kronenäther, Cryptanden, Podanden, ainsi que dans FR-A-2201304 et FR-A-2398079. Les éthers couronnes et les cryptants peuvent être utilisés soit sous forme de molécules libres, soit sous forme fixée à un polymère. Parmi les éthers-couronne et les cryptants on préfère utiliser ceux qui forment avec le cation de la base alcaline employée les complexes dont la constante de stabilité est particulièrement élevée. L'homme de métier connaît bien les complexants de ce type qui sont particulièrement préférés. On peut utilement se reporter à l'article de C. Kappenstein paru dans le Bulletin de la Société Chimique de France, no 1–2, pages 89 à 109, (1974). Ainsi si la soude est employée dans la phase aqueuse, on utilise avec avantage l'hexaoxa-1,4,7,10,13,16 cyclo-octadecadiène-2,11, ou le dibenzo-18 couronne-6 selon la nomenclature de Pedersen, J.A.C.S., 1967, 89, page 7017, le cyclohexyl-15 couronne-5, le 18-couronne-6, le dicyclohexyl-18-couronne-6 ou bien les cryptants ‹222›, ‹221› désignés selon la nomenclature de J.M. LEHN (op. cit.) et de Kappenstein (op. cit.). A la potasse on associe avantageusement le 18-couronne-6, le dicyclohexyl-18-couronne-6 et le cyclohexyl-18-couronne-6, le ‹222›, le ‹221› et le ‹322›. Enfin, si on utilise la chaux, on est sensiblement replacé dans les mêmes conditions qu'avec $Na^+$ et on emploie avantageusement le 18-couronne-6 ou le dicyclohexyl-18-couronne-6 ou bien le ‹222›, le ‹221›, ou bien encore les cryptants fixés sur polymère commercialisés par la société MERCK sous les noms de Kryptofix ‹222› B polymer ou Kryptofix ‹221› B polymer où le reste polymère dérive d'une résine de Merrifield. Bien d'autres éthers-couronne ou cryptants conviennent parfaitement dans le cadre de l'invention, mais il s'agit de composés qui font figure de curiosités de laboratoire.

Bien que les complexants macrohéteroxycliques donnent généralement toute satisfaction

dans le cadre de l'invention, on leur préfère en règle générale les sels d'ammoniums quaternaires, qui sont au moins aussi efficaces et bien moins coûteux. Les sels de phosphonium ou d'arsonium ont quant à eux une activité généralement identique à celle des sels d'ammoniums quaternaires correspondants, mais sont en revanche sensiblement plus coûteux.

La quantité de catalyseur à utiliser est de l'ordre d'au moins 1% en mole par rapport à l'halogène contenu par le dérivé halogéno méthylé. Avantageusement on utilisera en fait une proportion d'environ 5% en mole. Un excès de catalyseur supérieur à 10% en mole n'apparaît ni comme nuisible, ni comme utile.

Il faut noter qu'il est classiquement admis dans le domaine de la catalyse par transfert de phase (Makosza et coll., J. Org. Chem. 43, 4682 (1978)) que les carbonates de sodium ou de potassium associés à un catalyseur de transfert de phase tel que le dicyclohexyl-18-couronne-6 constituent d'excellentes bases pour ce genre de réaction. Il s'est avéré que dans le cadre de l'invention ces associations ont une activité plutôt moyenne puisqu'on n'obtient avec alles que des rendements moyens à faibles. Ce phénomène surprenant n'a pas reçu d'explication. Une fois la réaction achevée, le milieu réactionnel est refroidi, la phase organique séparée de la phase aqueuse, puis traitée. Ce traitement peut constituer en un lavage à l'aide d'une solution acide diluée, éventuellement après dilution de ladite phase organique, à l'aide d'un solvant organique.

Les oxydes de dihydrocarbyle phosphines hydroxyméthylées utilisés dans le cadre de la présente invention peuvent être obtenus à l'aide de plusieurs méthodes bien connues. La plus générale de ces méthodes consiste à additionner une molécule d'aldéhyde à une molécule des oxydes de dihydrocarbyle phosphines selon la réaction:

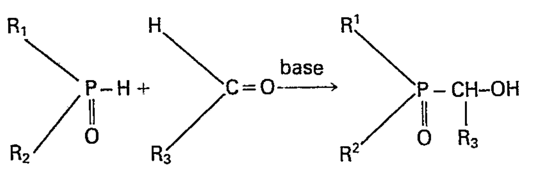


Une autre méthode plus spécifique aux oxydes phosphines hydroxyméthylées et monométhylées est décrite dans US-A-4028421 et consiste à obtenir un réarrangement thermique d'une bis (hydroxyméthyl) phosphine tertiaire:

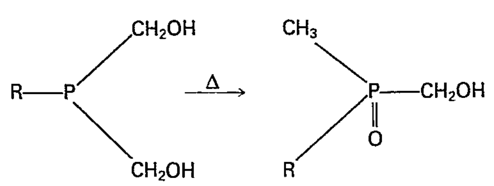


Les rendements obtenus par le procédé selon l'invention sont généralement extrêmement élevés notamment s'agissant au départ de molécules halogéno méthylées pour lesquelles lesdits rendements avoisinent régulièrement 95 à 100%. Toutefois la réacton est, toutes choses égales par ailleurs, plus facile avec les réactifs où $R_3$ = H qu'avec ceux où $R_3$ est un groupe hydrocarbyle.

L'invention concerne également des produits industriels nouveaux de formule générale:

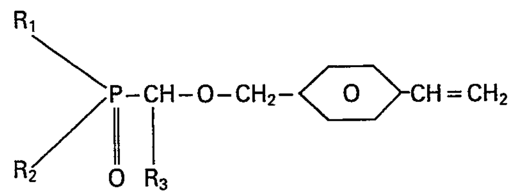

où $R_1$ et $R_2$ sont identiques ou différents et sont un groupe alkyle linéaire ou ramifié comportant de 1 à 18 atomes de carbone, de préférence de 1 à 12 atomes de carbone ou un groupe phényle et où $R_3$ est un atome d'hydrogène ou un groupe $-CH_2-R_4$ où $R_4$ est un groupe alkyle linéaire ou ramifié comprenant de 1 à 11 atomes de carbone, ou un atome d'hydrogène ou bien encore un groupe phényle.

Des produits selon l'invention qui sont particulièrement préférés sont ceux qui portent des radicaux n-octyle en tant que $R_1$ et $R_2$ et dans lesquels $R_3$ = H ou $-Ch_2-R_4$ où $R_4$ est un alkyle linéaire de $C_3$ à $C_8$.

Les produits selon l'invention trouvent notamment leur application dans les formulations phytosanitaires, comme composés ignifuges et comme agents extractants.

L'invention est encore illustrée par les exemples non limitatifs suivants, effectués sous atmosphère d'azote sauf stipulations expressément contraires.

Exemple 1

Dans un réacteur de 4 litres, surmonté d'un réfrigérant et d'un thermomètre et muni d'une agitation mécanique, on porte à reflux pendant 8 heures 273 g de dioctylphosphine oxyde (DOPO), préparé par condensation du diéthyl phosphite sur du chlorure d'octyl magnésium, avec 290 $cm^3$ de formaldéhyde à 35% en poids dans l'eau, 40 g de bicarbonate de sodium, 6,2 g de carbonate de potassium et 2,5 litres d'éthanol.

Après évaporation de l'alcool on dissout les composés organiques dans du dichlorométhane (1 litre), lave à l'eau, sèche sur $MgSO_4$, filtre et évapore. On obtient 96% d'hydroxyméthyl DOPO

IR: P = O: 1140 $cm^{-1}$
OH: 3200 $cm^{-1}$

RMN: – massif à 0,85 ppm (6 pr) pour les $-\underline{CH_3}$
– massif à 1,3 ppm (24 pr) pour les $-\overline{CH_2}$
– massif à 1,55 ppm (4 pr) pour les $-\overline{CH_2}-P$ (‖ O)
– massif à 3,65 ppm (2 pr) pour les $-\underline{CH_2}-OH$

Dans un réacteur de 4 litres, surmonté d'un réfrigérant et d'un thermomètre et muni d'une agitation mécanique, on place 1,5 kg de soude à 50% dans l'eau, 15 g de sulfate acide de tétrabutyl

ammonium (TBAH) et un mélange de 1 mole d'hydroxyméthyl DOPO (304 g) et 1 mole (137 g) de n-bromobutane de 2,5 litres de toluène.

Le mélange est agité fortement à 70°C pendant 4 heures.

Après décantation, on sépare les phases, évapore la phase organique et la réprend par 1 litre de dichlorométhane. Après lavage à l'eau (en ajoutant du NaCl pour faciliter la décantation)), on sèche sur sulfate de magnésium, on filtre, et on évapore. On obtient 325 g de di-n octyl n-butoxyméthyl phosphine oxyde.

IR: P = O: 1172 $cm^{-1}$

RMN: – massif à 0,87 ppm (9 pr) pour les $-CH_3$
– massif à 1,27 ppm (28 pr) pour les $-CH_2-$
– massif à 1,61 ppm (4 pr) pour les $-CH_2-P$
– triplet à 3,47 ppm (2 pr) pour les $-CH_2-O-$
– doublet à 3,72–3,6 ppm (2 pr) pour le

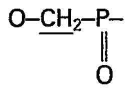

Exemples 2 à 7

On a utilisé le mode opératoire de l'exemple 1 sur des matières premières différentes, dans des conditions de température et durée sensiblement identiques.

Le DOPO a été utilisé dans les exemples 2 à 5 et le di-n-hexyl phosphine oxyde dans les exemples 6 et 7.

Le bromure de n'octyle a été utilisé dans les exemples 2 et 6, le bromure de n-butyle à l'exemple 4, et les chlorures de n-octyle, n-butyle et d'éthyl-2 hexyle respectivement dans les exemples 3, 5 et 7.

Les résultats obtenus ainsi que les conditions spéciales utilisées sont rapportés dans le tableau suivant:

| Ex. | $R_1$, $R_2$ | $CH_2-R$ | X | °C | t(h) | Rendement |
|---|---|---|---|---|---|---|
| 2 | n $C_8H_{17}-$ | n $C_8H_{17}-$ | Br | 70°C | 4 | 92% |
| 3 | n $C_8H_{17}-$ | n $C_8H_{17}-$ | Cl | 70°C | 5 | 35% |
| 4 | n $C_8H_{17}-$ | n $C_4H_9-$ | Br | 70°C | 4 | 90% |
| 5 | n $C_8H_{17}-$ | n $C_4H_9-$ | Cl | 75°C | 5h30 | 75% |
| 6 | n $C_6H_{13}-$ | n $C_8H_{17}-$ | Br | 70°C | 1 | 80% |
| 7 | n $C_6H_{13}-$ | 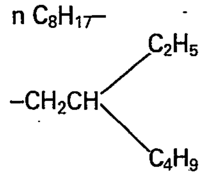 | Cl | 85°C | 3 | 65% |

Le mauvais résultat de l'exemple 3 est dû à la décomposition thermique prématurée du TBAH. Un rendement de 75% peut être obtenu dans ce cas en rajoutant 10 g de TBAH après 4 heures de réaction.

Exemple 8

Dans un réacteur de 1 litre on a placé 54,8 g de DOPO, 6 g de formaldéhyde, 0,3 g d'hydrogénosulfate de tétrabutyle ammonium, 0,05 g de $K_2CO_3$ et 600 ml d'éthanol. On laisse réagir 4 heures sous reflux après quoi on évapore l'éthanol sous pression réduite et on récupère le dioctyl hydrométhyl phosphine oxyde. Dans un réacteur de 2 litre on place 60 g du dioctylhydroxyméthyl phosphine oxyde obtenu précédemment, 700 g de soude en pastilles, 700 g d'eau, 600 ml de toluène et 1 g de TBAH.

A température ambiante de 20°C, on additionne le mélange sous agitation 30 g de p-chlorométhyl styrène en solution dans 50 ml de toluène. On laisse réagir sous agitation pendant 6 heures après quoi on laisse décanter le mélange réactionnel, on récupère la phase organique, on la filtre, on la sèche sur Mg $SO_4$ et on évapore le toluène sous pression réduite.

On obtient avec un rendement de 93%, un produit fondant à 22°C et identifié pour avoir la formule:

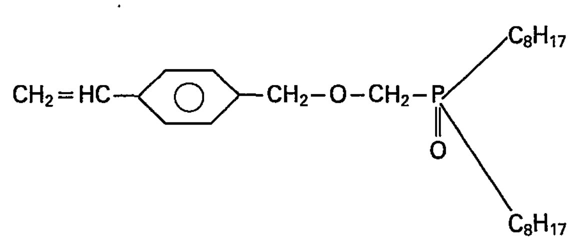

par les spectres suivants:

Résonnance Magnétique Nucléaire:

| | | |
|---|---|---|
| Multiplet | à 0,92 ppm | ($CH_3$ des octyl) |
| Massif | à 1,27 ppm | ($CH_2$ des octyl) |
| Massif | à 1,62 ppm | ($CH_2$ en $\alpha$ du P) |
| Doublet | à 3,70 ppm | ($CH_2$ entre P et O) |
| Singulet | à 4,52 ppm | ($CH_2$ entre O et phényle) |
| Multiplet | à 5,45 ppm | ($CH_2$ vinylique) |
| Multiplet | à 6,72 ppm | (CH vinylique) |
| Massif | à 7,30 ppm | (H aromatique) |

IR: Absorption groupe P = O à 1170–1180 $cm^{-1}$
Absorption groupe $CH_2$ O $CH_2$ à 1090 $cm^{-1}$

**Revendications**

1. Procédé de synthèse d'oxydes de phosphines tertiaires, caractérisé en ce qu'on fait réagir dans un milieu organique non miscible à l'eau – un

oxyde de phosphine tertiaire hydroxyméthylée de formule générale:

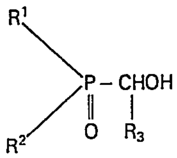

où

$R_1$ et $R_2$ sont identiques ou différents et sont un groupe alkyle linéaire ou ramifié comportant de 1 à 18 atomes de carbone, de préférence de 1 à 12 atomes de carbone ou encore un groupe phényle et où

$R_3$ est un atome d'hydrogène ou bien un groupe $-CH_2-R_4$ ou

$R_4$ est un hydrogène ou un groupe alkyle linéaire ou ramifié comprenant de 1 à 11 atomes de carbone ou bien un groupe phényle

– sur un dérivé halogéno méthylé en présence d'une phase aqueuse renfermant une base minérale, en présence d'un catalyseur de transfert de phase et sous agitation.

2. Procédé selon la revendication 1, caractérisé en ce que le dérivé halogéno méthylé a pour formule générale $XCH_2R$ dans laquelle:

X est un atome de chlore ou de brome et,

R est un groupe $-CH=CHY$ où

Y est un atome d'hydrogène, un groupe phényle ou un groupe $-CH_2X$ dans lequel

X a l'une des significations indiquées plus haut ou bien,

R est un groupe 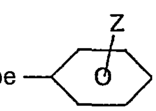

où

Z est un atome d'hydrogène, un groupe alkyle de $C_1$ à $C_4$, un groupe vinyle, un atome d'halogène, un groupe $-CH_2X$ ou un groupe

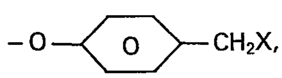

X ayant l'une des significations indiquées plus haut, ou bien,

R est une chaîne alkyle comprenant de 1 à 12 atomes de carbone,

éventuellement substituée par au moins un groupe nitrile ou époxy.

3. Procédé selon l'une quelconque des revendications 1 et 2, caractérisé en ce que la phase aqueuse renfermant une base minérale est une solution aqueuse renfermant de 30 à 60% en poids de soude ou de potasse.

4. Procédé selon l'une quelconque des revendications 1 à 3, caractérisé en ce que le catalyseur de transfert de phase est choisi dans le groupe constitué par les sels d'ammonium, de phosphonium ou d'arsonium quaternaires de formule générale

$$A_1A_2A_3A_4 \quad Y^+, X^-$$

où Y = N, P ou As

où $A_1$, $A_2$, $A_3$ et $A_4$ sont identiques ou différents et sont des groupes alkyle de $C_1$ à $C_8$ ou des groupes benzyle et où $X^-$ est un anion halogénure, carboxylate, hydrogénosulfate ou hydroxy.

5. Procédé selon l'une quelconque des revendications 1 à 3, caractérisé en ce que le catalyseur de transfert de phase est choisi dans le groupe constitué par les polyoxydes d'éthylène, les éthers-couronnes et les cryptants.

6. Procédé selon l'une quelconque des revendications précédentes, caractérisé en ce que la réaction est effectuée entre 40 et 70°C.

7. Procédé selon l'une quelconque des revendications précédentes, caractérisé en ce que le rapport des volumes de phase aqueuse et de phase organique est compris entre 5:1 et 1:10.

8. Procédé selon l'une quelconque des revendications précédentes, caractérisé en ce que la concentration des réactifs dans la phase organique est comprise entre 0,1 et 20%.

9. Procédé selon l'une quelconque des revendications précédentes, caractérisé en ce que la proportion de catalyseur de transfert de phase par rapport au dérivé halogéno méthylé est comprise entre 1 et 10% en mole, de préférence de 5% en mole.

10. Les oxyde de phosphines tertiaires de formule générale:

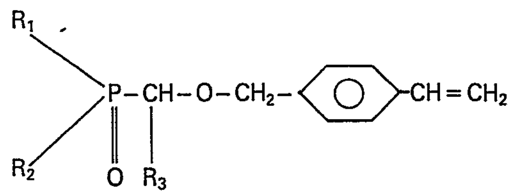

où

$R_1$ et $R_2$ sont identiques ou différents et sont un groupe alkyle linéaire ou ramifié comportant de 1 à 18 atomes de carbone, de préférence de 1 à 12 atomes de carbone ou un groupe phényle et où

$R_3$ est un atome d'hydrogène ou un groupe $-CH_2-R_4$ où

$R_4$ est un groupe alkyle linéaire ou ramifié comprenant de 1 à 12 atomes de carbone ou un groupe phényle ou un atome d'hydrogène.

**Patentansprüche**

1. Verfahren zur Herstellung von tertiären Phosphinoxiden, gekennzeichnet durch die Umsetzung eines tertiären Hydroxymethylphosphinoxids der allgemeinen Formel

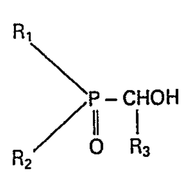

in der

$R_1$ und $R_2$ gleich oder verschieden sind und je eine geradkettige oder verzweigte $C_{1-18}$-Alkylgruppe und vorzugsweise eine $C_{1-12}$-Alkylgruppe oder eine Phenylgruppe bedeuten und

$R_3$ ein Wasserstoffatom oder eine Gruppe $-CH_2-R_4$ ist, wobei

$R_4$ ein Wasserstoffatom oder eine geradkettige oder verzweigte $C_{1-11}$-Alkylgruppe oder eine Phenylgruppe ist,

mit einem Methylhalogenderivat in einem mit Wasser nicht mischbaren organischen Medium in Gegenwart einer wässrigen, eine Alkaliverbindung enthaltenden Phase und eines Phasentransferkatalysators und unter Rühren.

2. Verfahren nach Anspruch 1, dadurch gekennzeichnet, dass das Methylhalogenderivat die allgemeine Formel $XCH_2R$ hat, in der

X ein Chlor- oder Bromatom ist und

R ein Rest $-CH=CHY$ ist, wobei

Y ein Wasserstoffatom, eine Phenylgruppe oder ein Rest $-CH_2X$ ist, in dem

X die oben angegebene Bedeutung hat, oder eine Gruppe der Formel

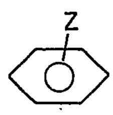

bedeutet, in der

Z ein Wasserstoffatom, eine $C_{1-4}$-Alkylgruppe, eine Vinylgruppe, ein Halogenatom, ein Rest $-CH_2X$ oder ein Rest

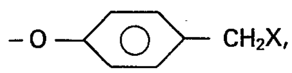

ist, wobei

X eine der oben angebenen Bedeutung hat, oder ein geradkettiger $C_{1-12}$-Alkylrest ist,

der ggf mit mindestens einer Nitril- oder Epoxygruppe substituiert ist.

3. Verfahren nach Anspruch 1 oder 2, dadurch gekennzeichnet, dass die wässrige, eine alkaliverbindung enthaltende Phase eine wässrige Lösung von 30 bis 60 Gew.-% Natrium- oder Kaliumcarbonat ist.

4. Verfahren nach einem der Ansprüche 1 bis 3, dadurch gekennzeichnet, dass der Phasentransferkatalysator unter quartären Ammonium-, Phosphonium- oder Arsoniumsalzen der allgemeinen Formel

$A_1A_2A_3A_4 \quad Y^+, X^-$

ausgewählt wird, wobei

Y = N, P oder As

$A_1$, $A_2$, $A_3$ und $A_4$ gleich oder verschieden sind und $C_{1-8}$-Alkylgruppen oder Benzylgruppen bedeuten und $X^-$ ein Halogenid-, Carboxylat-, Hydrogensulfat- oder Hydroxylanion ist.

5. Verfahren nach einem der Ansprüche 1 bis 3, dadurch gekennzeichnet, dass der Phasentransferkatalysator unter Polyethylenoxiden, Kronenether oder Kryptanden ausgewählt wird.

6. Verfahren nach einem der vorstehenden Ansprüche, dadurch gekennzeichnet, dass die Umsetzung zwischen 40 und 70°C durchgeführt wird.

7. Verfahren nach einem der vorstehenden Ansprüche, dadurch gekennzeichnet, dass das Volumenverhältnis von wässriger Phase zu organischer Phase von 5:1 bis 1:10 beträgt.

8. Verfahren nach einem der vorstehenden Ansprüche, dadurch gekennzeichnet, dass die Konzentration der reaktiven Bestandteile in der organischen Phase von 0,1 bis 20% beträgt.

9. Verfahren nach einem der vorstehenden Ansprüche, dadurch gekennzeichnet, dass das Verhältnis von Phasentransferkatalysator zu Methylhalogenderivat von 1 bis 10 Mol-% und vorzugsweise 5 Mol-% beträgt.

10. Tertiäre Phosphinoxide der allgemeinen Formel

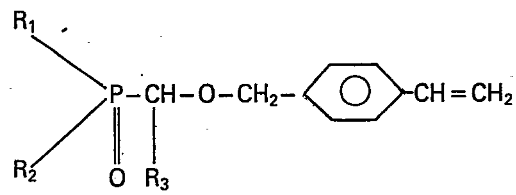

in der

$R_1$ und $R_2$ gleich oder verschieden sind und je eine geradkettige oder verzweigte $C_{1-18}$-Alkylgruppe und vorzugsweise eine $C_{1-12}$-Alkylgruppe oder eine Phenylgruppe bedeuten und

$R_3$ ein Wasserstoffatom oder eine Gruppe $-CH_2-R_4$ ist, wobei

$R_4$ ein Wasserstoffatom oder eine geradkettige oder verzweigte $C_{1-11}$-Alkylgruppe oder eine Phenylgruppe ist.

## Claims

1. Process for the synthesis of tertiary phosphine oxides, characterised in that a tertiary hydroxymethylphosphine oxide of the general formula:

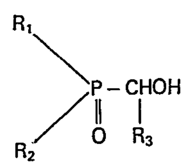

in which

$R_1$ and $R_2$ are identical or different and are a linear or branched alkyl group containing from 1 to 18 carbon atoms, preferably from 1 to 12 carbon atoms, or a phenyl group, and

$R_3$ is a hydrogen atom or alternatively a group $-CH_2-R_4$, in which

$R_4$ is a hydrogen atom, a linear or branched alkyl group containing from 1 to 11 carbon atoms or alternatively a phenyl group,

is reacted with a halogenomethyl derivative in a water-immiscible organic medium, in the presence of an aqueous phase containing an inorganic base, and in the presence of a phase transfer catalyst, with stirring.

2. Process according to claim 1, characterised in that the halogenomethyl derivative has the general formula $XCH_2R$, in which:

X is a chlorine or bromine atom and
R is a group $-CH=CHY$, in which
Y is a hydrogen atom, a phenyl group or a group $-CH_2X$, in which
X has one of the meanings indicated above, or alternatively
R is a group

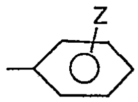

in which
Z is a hydrogen atom, a $C_1$ to $C_4$ alkyl group, a vinyl group, a halogen atom, a group $-CH_2X$ or a group

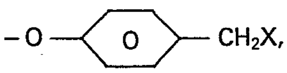

X having one of the meanings indicated above, or alternatively
R is an alkyl chain containing from 1 to 12 carbon atoms,

which is optionally substituted by at least one nitrile or epoxy group.

3. Process according to either one of claims 1 and 2, characterised in that the aqueous phase containing an inorganic base is an aqueous solution containing from 30 to 60% by weight of sodium hydroxide or potassium hydroxide.

4. Process according to any one of claims 1 to 3, characterised in that the phase transfer catalyst is chosen from the group comprising the quaternary ammonium, phosphonium or arsonium salts of the general formula:

$A_1A_2A_3A_4 \quad Y^+, X^-$

in which
Y = N, P or As,
$A_1$, $A_2$, $A_3$ and $A_4$ are identical or different and are $C_1$ to $C_8$ alkyl groups or benzyl groups and $X^-$ is a halide, carboxylate, hydrogen sulphate or hydroxide anion.

5. Process according to any one of claims 1 to 3, characterised in that the phase transfer catalyst is chosen from the group comprising polyethylene oxides, crown ethers and cryptands.

6. Process according to any one of the preceding claims, characterised in that the reaction is carried out at between 40 and 70°C.

7. Process according to any one of the preceding claims, characterised in that the ratio of the volume of aqueous phase to the volume of organic phase is between 5:1 and 1:10.

8. Process according to any one of the preceding claims, characterised in that the concentration of the reactants in the organic phase is between 0.1 and 20%.

9. Process according to any one of the preceding claims, characterised in that the proportion of phase transfer catalyst, relative to the halogenomethyl derivative, is between 1 and 10 mol %, preferably 5 mol %.

10. The tertiary phosphine oxides of the general formula:

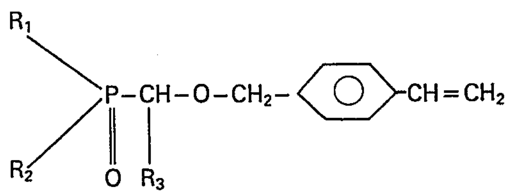

in which
$R_1$ and $R_2$ are identical or different and are a linear or branched alkyl group containing from 1 to 18 carbon atoms, preferably from 1 to 12 carbon atoms, or a phenyl group,
$R_3$ is a hydrogen atom or a group $-CH_2-R_4$, in which
$R_4$ is a linear or branched alkyl group containing from 1 to 12 carbon atoms, a phenyl group or a hydrogen atom.